# EUROPÄISCHE PATENTANMELDUNG

(11) **EP 1 596 117 A1**
(43) Veröffentlichungstag der Anmeldung: **16.11.2005**
(21) Anmeldenummer: 05009645.2
(22) Anmeldetag: 03.05.2005
(51) Int. Cl.: F16L 33/26

(54) **Verbindung zwischen dem Ende eines gewellten Rohres und einem Anschlussstück**

(30) Priorität: 07.05.2004 DE 202004007321 U
(71) Anmelder: BRUGG Rohr AG, Holding, 5200 Brugg (CH)
(72) Erfinder: Nielinger, Helga, Dipl.-Ing., 31535 Neustadt (DE); Homann, Jörn, Dipl.-Ing., 30655 Hannover (DE)

(57) **Zusammenfassung**

Es wird eine Verbindung zwischen dem Ende eines gewellten Metallrohres (1) und einem Anschlußstück (4) beschrieben, bei dem in oder auf dem Ende des gewellten Rohres (1) ein Stützring (2) und/oder ein Druckring (3) vorgesehen ist und in einer durch den Stützring (2) oder den Druckring (3) und das gewellte Rohr (1) gebildeten Kammer (5) ein verformbarer Dichtring (6) angeordnet ist, der sich bei einer längsaxialen Verschiebung des Stützrings (2) und/oder des Druckringes (3) oder des Anschlußstücks (4) in radialer Richtung verformt, wobei der Dichtring (6) an seiner dem Wellrohr (1) zugekehrten Oberfläche eine der Kontur des Wellrohres (1) angepaßte Kontur (6a) aufweist.

## Beschreibung

Die Erfindung betrifft eine Verbindung zwischen dem Ende eines gewellten Rohres und einem Anschlußstück nach dem Oberbegriff des Anspruchs 1.

Gewellte Rohre, Metallrohre, die in kontinuierlicher Arbeitsweise in großen Längen durch Formen eines von einem Bandablauf abgezogenen Metallbandes zu einem Rohr mit Längsschlitz, Verschweißen des Längsschlitzes und anschließendes Wellen hergestellt werden, weisen eine Reihe von herausragenden Eigenschaften auf, wie beispielsweise eine gute Biegbarkeit, hohe Quersteifigkeit etc. Ein Nachteil bei gewellten Metallrohren besteht darin, daß das Anschließen an Armaturen wegen der dünnen Wanddicke der Rohre sich als äußerst schwierig erweist. Bei schraubenlinienförmig gewellten Rohren kommt noch hinzu, daß die Stirnfläche des Rohres immer exzentrisch zur Rohrlängsachse gelegen ist.

Aus der DE-A-33 41 297 ist eine Dichtpackung zum Abdichten von Wellrohren bekannt, die aus zwei auf dem Wellrohr angeordneten gegeneinander beweglichen und ineinander fassenden Buchsen besteht, zwischen welchen ein das Wellrohr umfassender Ringraum zur Aufnahme einer Dichtmasse gebildet wird. Es ist eine sich von innen an den Dichtbereich anlegende Wellrohrhülse vorgesehen. Als Dichtmasse wird Graphit vorgeschlagen.

Aus der EP-0 775 865 B1 ist eine Verbindung zwischen dem Ende eines schraubenlinienförmig gewellten Metallrohres mit einem Anschlußstück bekannt, bei dem in das Ende des Metallrohres ein Stützring mit einem an seiner äußeren Oberfläche befindlichen Grobgewinde eingeschraubt ist. Auf das Ende des Metallrohres ist ein ein Innengrobgewinde aufweisender Dichtring aufgeschraubt. Das dem Wellrohr zugekehrte Ende des Anschlußstücks, Druckring sowie der Stützring sind konstruktiv so ausgestaltet, daß sich eine Kammer bildet, in welche ein Dichtring einlegbar ist, der durch längsaxiales Verschieben die Dichtkammer ausfüllt und sich dabei in die äußere Kontur des Wellrohres einformt.

Eine ähnliche Anschlußverbindung ist aus der DE 201 13 861 U1 bekannt. Auch hier wird ein auf das Wellrohrende aufgesteckter Dichtring durch längsaxiales Stauchen in radialer Richtung verformt.

Bei einer älteren Anmeldung der Anmelderin (103 10 938.2) ist die Kammer zur Aufnahme des Dichtrings zwischen dem Wellrohr und einem in das Wellrohrende eingeschraubten Stützring gebildet. Der Dichtring wird hier gegen die innere Oberfläche des Wellrohres geformt.

Die bekannten Verbindungen haben sich in der Praxis bewährt. Schwierigkeiten sind bei Nennweiten von mehr als DN 80 zu erwarten, da dort sehr hohe Preßkräfte zur Verformung des Dichtringes erforderlich werden, welche bei den bekannten Verbindungen nur schwer aufgebracht werden können.

Der vorliegenden Erfindung liegt die Aufgabe zugrunde, die bekannten Verbindungen so zu verbessern, daß sie auch für gewellte Rohre mit einer Nennweite von mehr als DN 80 geeignet sind.

Diese Aufgabe wird durch das im Kennzeichen des Anspruchs 1 Erfaßte gelöst.

Weitere vorteilhafte Ausgestaltungen sind in den Unteransprüchen erfaßt.

Der besondere Vorteil der Erfindung ist darin zu sehen, daß durch die Anpassung der Kontur des Dichtrings an die Kontur des Wellrohres die Baulängen erheblich verkürzt werden und durch die kleine Preßfläche die Preßkräfte erheblich geringer werden und ein vollständiges Ausfüllen der Dichtkammer gewährleistet ist. Dadurch ist die gewünschte Abdichtung sichergestellt.

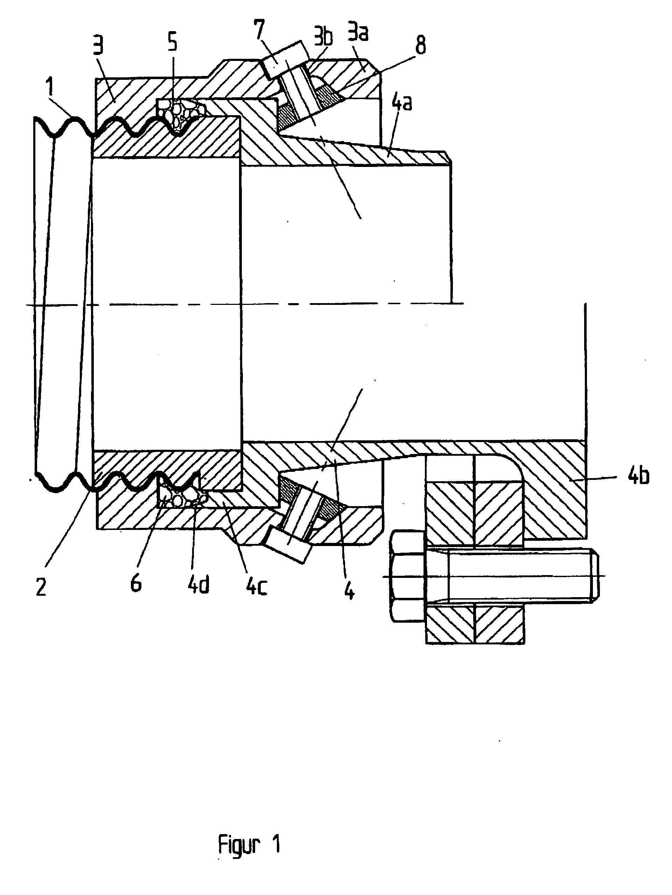

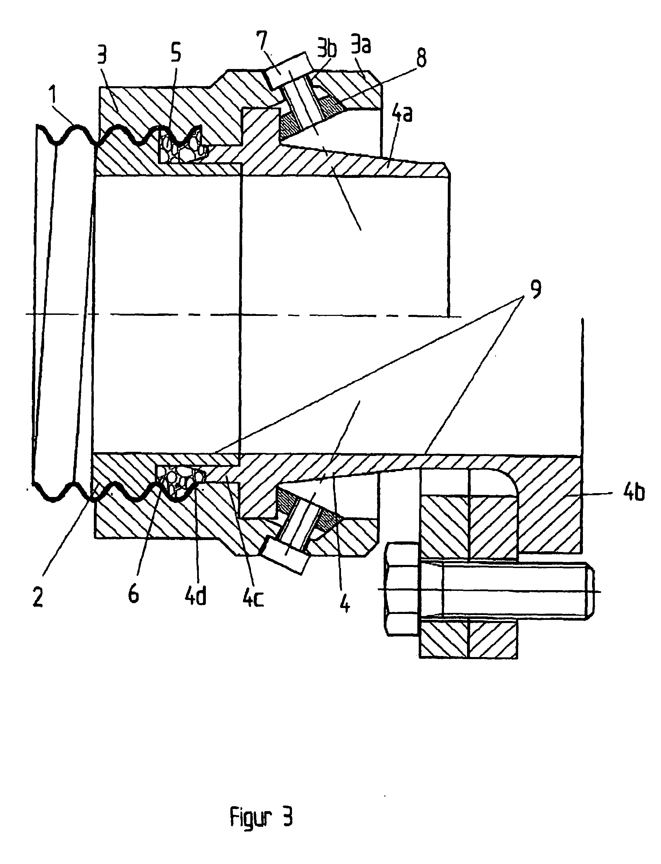

Die Erfindung ist anhand der in den Figuren 1 bis 4 schematisch dargestellten Ausführungsbeispiele näher erläutert.

In der Figur 1 ist ein Schnitt durch eine Verbindung nach der Lehre der Erfindung dargestellt.

In der Figur 1 ist das Ende eines schraubenlinienförmig gewellten, dünnwandigen, längsnahtgeschweißtes Metallrohr 1 dargestellt, in welches eine Stützbuchse 2 mit einem der Wellform angepaßten Grobgewinde eingeschraubt ist.

Auf das Ende des Wellrohres 1 ist ein Druckring 3 mittels eines der Wellform angepaßten Grobgewindes aufgeschraubt.

Ein Anschlußstück 4, an dessen Ende 4a ein weiteres rohrförmiges Teil angeschweißt oder angeschraubt werden kann oder welches einen Flanschteller 4b aufweist, besitzt an seinem dem Ende 4a bzw. dem Flansch 4b entgegengesetzten Ende einen im Durchmesser erweiterten Bereich 4c, welcher in einem Spalt zwischen dem Druckring 3 und der Stützbuchse 2 eindringt. Der Bereich 4c weist an seinem freien Ende ein zum Ende hin konisch verlaufenden Zunge 4d auf.

In einer durch eine Stirnfläche und die Innenwand des Druckringes 3, einer Stirnfläche des Anschlußstücks 4, und einem Teil des Wellrohres 1 gebildete Kammer 5 ist ein Dichtring 6 angeordnet.

Durch längsaxiales Verschieben des Anschlußstückes 4 in Richtung auf das Ende des Wellrohres 1 dringt das Teil 4c in die Kammer 5 ein, verringert deren Volumen und verpreßt den Dichtring 6 in längsaxialer sowie auch in radialer Richtung. Dadurch wird eine Abdichtung des Endes des Wellrohres 1 erreicht.

Das längsaxiale Verschieben des Anschlußstücks 4 kann auf vielerlei Weise geschehen. So ist es beispielsweise möglich, durch ein außen an den Druckring 3 und das Anschlußstück angreifenden Werkzeug, den Dichtring 6 zu verpressen.

In der Figur 1 ist eine weitere Möglichkeit dargestellt. An dem dem Wellrohrende abgekehrten Ende 3a des Druckrings 3 sind Schrägbohrungen 3b vorgesehen, von denen nur eine dargestellt ist. In den Schrägbohrungen 3b sind Schraubbolzen 7 angeordnet, auf deren Ende ein Konusring 8 aufgeschraubt ist. Beim Anziehen der Schraubbolzen 7 wirken die Konusflächen des Konusringes auf die entsprechenden Flächen des Anschlußstücks 4 und des Druckrings 3 ein.

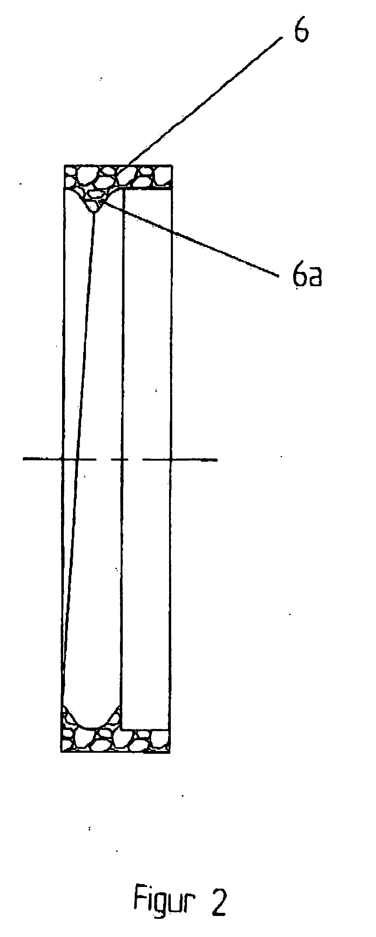

In der Figur 2 ist ein Schnitt durch einen Dichtring 6 dargestellt. Der Dichtring 6 weist an seiner inneren Oberfläche eine schraubenlinienförmig verlaufende Wellung 6a auf, welche der Wellung des gewellten Rohres 1 angepaßt ist. Die äußere Oberfläche des Dichtrings 6 ist glatt. Der in Figur 2 dargestellte Dichtring 6 kann auf das Ende des gewellten Rohres 1 leicht aufgeschraubt werden, da seine innere Oberfläche einen Luftspalt von einigen Zehntel Millimeter zum gewellten Rohr 1 aufweist.

Sein Außendurchmesser ist ebenfalls um einige Zehntel Millimeter geringer als der Innendurchmesser des Teiles des Druckringes 3, welcher die äußere Begrenzung der Kammer 5 bildet.

Durch das längsaxiale Verschieben des Anschlußstücks 4 dringt die konische Zunge 4d des Bereichs 4c in den Dichtring 6 und drückt das Dichtmaterial in alle vorhandenen Spalte.

Als Material für den Dichtring 6 wird ein spezieller Graphit verwendet, der eine Dichte von 1,25 bis 1,6 g/cm_ hat. Im verpreßten Zustand ist die Dichte um ca. 10 bis 30 % höher. Der Dichtring 6 kann in einer Form mit einem Kern, dessen äußerer Oberfläche das Wellprofil aufweist, hergestellt werden. Nach Fertigstellung kann der Kern z. B. herausgeschraubt und der Dichtring aus der Form entnommen werden.

Die Figur 3 zeigt eine weitere Ausführungsform, bei welcher in Abänderung zu Figur 2 der Bereich 4c des Anschlußstücks 4c sowie die benachbarten Teile des Stützrings 2 und des Druckrings 3 entsprechend angepaßt sind. Diese Ausgestaltung ermöglicht eine Abdichtung im Innern des Wellrohres 1. Dadurch können die äußeren Abmessungen der Verbindung verringert werden.

Die Figur 4 zeigt eine weitere vorteilhafte Ausgestaltung einer erfindungsgemäßen Verbindung.

Das Anschlußstück 4 weist an seinem dem Wellrohr 1 zugekehrten Ende eine lanzenförmige Verlängerung 4e auf, welche eng an der Innenkontur des Druckrings 3 anliegt und sich über die gesamte axiale Länge des Dichtringes 6 erstreckt. Die Wanddicke der Verlängerung 4e beträgt zwischen 1,2 und 5 mm. Durch die lanzenförmige Verlängerung 4e wird eine optimale Verpressung des Dichtringes 6 erreicht, die sich in radialer Richtung kräftemäßig gleichmäßig auf das Ende des Wellrohres 1 verteilt. Alle Bauteile der Verbindung sind selbsthemmend verpreßt, da die Querkräfte bedingt durch die Verpressung des Dichtringes 6 größer sind als die axialen Rückstellkräfte des Dichtringes 6. Es entstehen Kräfte in axialer Richtung überwiegend durch Querdehnung des Dichtrings 6. Das Anschlußstück 4 ist über die lanzenförmige Verlängerung 4e fest eingeklemmt.

Mit 10 ist ein Schraubbolzen bezeichnet, der nur im Betrieb die Druckkräfte des Leitungsrohres aufnehmen muß.

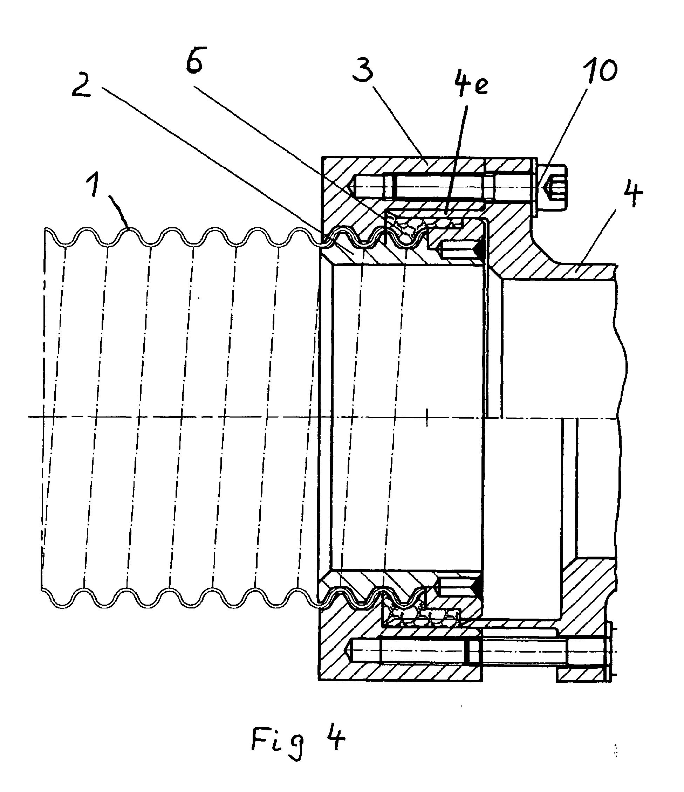

Das Verpressen des unverformten Dichtrings 6 (s. untere Hälfte der Figur 4) kann z. B. durch nicht mehr dargestellte Werkzeuge erfolgen, die nicht Teil der Verbindung sind. Die zum Verpressen benötigten Kräfte in axialer Richtung werden beispielsweise durch Preßvorrichtungen etc. aufgebracht.

## Patentansprüche

1. Verbindung zwischen dem Ende eines gewellten Metallrohres (1) und einem Anschlußstück (4), bei dem in oder auf dem Ende des gewellten Rohres (1) ein Stützring (2) und/oder ein Druckring (3) vorgesehen ist und in einer durch den Stützring (2) oder den Druckring (3) und das gewellte Rohr (1) gebildeten Kammer (5) ein verformbarer Dichtring (6) angeordnet ist, der sich bei einer längsaxialen Verschiebung des Stützrings (2) und/oder des Druckringes (3) oder des Anschlußstücks (4) in radialer Richtung verformt, **dadurch gekennzeichnet, daß** der Dichtring (6) an seiner dem Wellrohr (1) zugekehrten Oberfläche eine der Kontur des Wellrohres (1) angepaßte Kontur (6a) aufweist.

2. Verbindung nach Anspruch 1, **dadurch gekennzeichnet, daß** der Dichtring (6) aus einem plastisch oder elastisch verformbaren Werkstoff wie Graphit oder einem gummielastischen Material hergestellt ist.

3. Verbindung nach Anspruch 1 oder 2, **dadurch gekennzeichnet, daß** der Dichtring (6) aus zwei Halbschalen besteht.

4. Vorrichtung nach einem der Ansprüche 1 bis 3, bei einem schraubenlinienförmig gewellten Rohr, **dadurch gekennzeichnet, daß** der Dichtring (6) an seiner inneren oder äußeren Oberfläche ein schraubenlinienförmiges Grobgewinde (6a) aufweist und auf oder in das Wellrohr (1) einschraubbar ist.

5. Verbindung nach Anspruch 5, **dadurch gekennzeichnet, daß** zwischen dem Wellrohr (1) und dem Dichtring (6) ein Luftspalt von 0,1 bis 0,3 mm vorgesehen ist.

6. Verbindung nach einem der Ansprüche 1 bis 5, **dadurch gekennzeichnet, daß** das Anschlußstück (4) an seinem dem Dichtring (6) zugekehrten Ende eine den Dichtring (6) umschließende lanzenförmige Verlängerung (4e) aufweist.

7. Verbindung nach Anspruch 6, **dadurch gekennzeichnet, daß** die Wanddicke der Verlängerung (4e) 1 bis 2 mm, vorzugsweise 1,2 bis 1,6 mm beträgt.

8. Verbindung nach Anspruch 6 oder 7, **dadurch gekennzeichnet, daß** sich die Verlängerung über die gesamte axiale Länge des Dichtrings (6) erstreckt.
